# EUROPEAN PATENT SPECIFICATION

(11) **EP 2 105 243 B1**
(45) Date of publication and mention of the grant of the patent: **05.01.2011**
(21) Application number: 09004036.1
(22) Date of filing: 20.03.2009
(51) Int. Cl.: B23K 35/02, B23K 35/30, B23K 35/368

(54) **Metal-based flux cored wire for Ar-CO2 mixed gas shielded arc welding**
Mit auf Metall basierendem Flussmittel gefüllter Draht für Ar/CO2-Mischschutzgas-Schweißen
Fil à flux incorporé à base de métal pour soudure en arc blindé gaz mélangé Ar-CO2

(30) Priority: 26.03.2008 JP 2008080589; 16.01.2009 JP 2009007865
(43) Date of publication of application: 30.09.2009
(73) Proprietor: Nippon Steel & Sumikin Welding Co., Ltd., Chuo-ku Tokyo 104-0045 (JP)
(72) Inventor: Nagashima, Shushiro, Tokyo 104-004 (JP); Kamada, Masao, Tokyo 104-004 (JP); Kayamori, Yuki, Tokyo 104-004 (JP)
(74) Representative: Vossius & Partner

(56) References cited:
- EP-A- 1 547 722
- WO-A-2006/104248
- JP-A- 59 104 291
- JP-A- 61 046 397
- JP-A- 2005 186 158

## Description

This application is based upon and claims the benefit of priority of the prior Japanese Patent Application No. 2009-007865, filed on January 16, 2009,and the prior Japanese Patent Application No. 2008-080589, filed on March 26, 2008 the entire contents of which are incorporated herein by reference.

The present invention relates to a metal-based flux cored wire for Ar-CO₂ mixed gas shielded arc welding, more particularly relates to a metal-based flux cored wire for Ar-CO₂ mixed gas shielded arc welding (hereinafter referred to as "metal-based flux cored wire for Ar-CO₂ welding") able to be used for both short arc welding and spray arc welding, resulting in an extremely small amount of formation of slag and small amount of occurrence of spatter, giving a good bead shape, and furthermore giving an excellent low temperature toughness of the weld metal.

In the fields of construction machinery, steel frames, etc., grooves of fillet welds and joint welds are often continuously welded by multiple passes. Flux cored wire resulting in a large amount of formation of slag such as rutile-based or basic-based ones are not preferred. Solid wire with a little amount of formation of slag and metal-based flux cored wire with high welding ability, high efficiency are being used. Metal-based flux cored wire simplifies the slag removal work in continuous multipass welding and enables short arc welding (short circuit transition) in the low welding current region, so is most preferable for a welding of thin-gauge plate or a formation of penetration bead by initial layer pass in one side joint welding where droplets of molten metal easily occur in spray arc welding.

Further, the features of metal-based flux cored wire for Ar-CO₂ welding are, compared with metal-based flux cored wire for CO₂ gas shielded arc welding, the smaller size of the molten droplets and therefore the prevention of formation of large droplets of spatter, the smooth bead shape, and the small degree of formation of slag due to the Mn, Si, other alloy agents and deoxidizing agents and therefore the smaller amount of formation of slag possible. Furthermore, the smaller amount of slag is also effective for reducing the amount of oxygen in the weld metal and improving the impact toughness.

In conventional metal-based flux cored wire, there have been many proposals for improving the weldability for the welding work efficiency mainly in the case of use for CO₂ gas shielded arc welding. For example, Japanese Patent Publication (A) No. 2-274395 describes a metal-based flux cored wire introducing 54 to 85% of iron powder in the flux to improve the weldability in the low current region. However, carboxymethyl cellulose is included in the flux, so when applied to Ar-CO₂ mixed gas shielded arc welding, the arc in the spray arc welding was rough(unstable) and the amount of occurrence of spatter became a large quantity. Further, Japanese Patent Publication (A) No. 63-215395 describes a metal-based flux cored wire introducing at least 90% of metal powder in the flux to improve the weldability in the low welding current region. However, SiO₂, Al₂O₃, MgO, and other metal oxides and Ti, Al, Mg, and other strong deoxidizing ingredients are considerably included. When applied the flux cored wire to Ar-CO₂ mixed gas shielded arc welding, the arc was rough, the amount of occurrence of spatter was a large quantity, and the amount of formation of slag also became larger. Further, Japanese Patent Publication (A) No. 6-226492 describes a metal-based flux cored wire introducing at least 94% of metal powder in the flux to reduce the amount of production of fumes. However, Ti or Ti oxides are included, so when performing Ar-CO₂ mixed gas shielded arc welding, the bead surface was slightly covered filmy by the slag and therefore slag removal became difficult.

As opposed to these, Japanese Patent Publication (A) No. 2000-197991 proposes a metal-based flux cored wire for Ar-CO₂ welding in which the amount of formation of slag is small and the bead shape was improved, but the content of the metal powder was small, so there are the problems that the amount of occurrence of spatter in short arc welding was large quantity and low temperature toughness of the weld metal also cannot be obtained. EP 1547722 discloses a metal-base flux-cored wire for gas-shielded arc welding includes a steel hoop having a C content of 0.02% by mass or below, and a flux filled in the steel hoop and containing C in a C content between 0.07 and 0.22% by mass, Mn in a Mn content between 1.10 and 2.50% by mass, Si in a Si content between 0.40 and 1.50% by mass, F in a F content between 0.005 and 0.05% by mass, Fe in a Fe content between 11 and 23% by mass and alkali metals in an alkali metal content between 0.020 and 0.090% by mass on the basis of the total mass of the metal-base flux-cored wire. The alkali metals include Li, Na and K, and alkali metal content ratio expressed by (Li content) / (Na content + K content) is between 1.0 and 12.0.

The present invention has as its object the provision of metal-based flux cored wire for Ar-CO₂ mixed gas shielded arc welding resulting in extremely small amount of formation of slag and quantity of occurrence of spatter when used for short arc welding and spray arc welding, giving a good bead shape, and giving an excellent low temperature toughness of the weld metal.

This object can be achieved by the features specified in the claims. Particularly, the present invention provides a metal-based flux cored wire for Ar-CO₂ mixed gas shielded arc welding comprising steel sheath filled with flux, is **characterized in that** the flux contains a metal powder in 97 mass% or more, and the metal-based flux cored wire comprises of, by mass% with respect to the total weight of the wire, C: 0.03 to 0.12%, Si: 0.5 to 1.2%, Mn: 1.5 to 3.5%, S: 0.005 to 0.05%, an iron powder with amount of oxygen of 0.25% or less: 4.0 to 15.5%, a total of one or more of alkali metal oxides, alkali metal fluorides, and metal oxides:0.35% or less, and the balance of mainly Fe ingredient of the steel sheath and Fe ingredients from the flux(ferroalloy) etc. and unavoidable impurities.

Further, preferably it is **characterized in that** the total of Na converted value and K converted value of the alkali metal oxides and alkali metal fluorides are 0.10% or less and F converted value of the alkali metal fluorides is 0.10% or less.

Further, the gist of the present invention lies in a metal-based flux cored wire for Ar-CO₂ mixed gas shielded arc welding is characterized by containing one or both of Ni: 0.3 to 1.5% and B: 0.003 to 0.010%.

According to the metal-based flux cored wire for Ar-CO₂ mixed gas shielded arc welding of the present invention, the work for removal of the slag or spatter can be greatly reduced when used for fillet welding or joint multipass welding in the fields of construction machinery or iron frames, the bead shape is good, and the low temperature toughness of the weld metal in the case of use for low temperature use steel is excellent, so it is possible to obtain a high quality weldments with a high efficiency.

The inventors prepared various flux cored wires for solving the above problem and investigated the effects of the various compositions of ingredients on the arc conditions, amount of occurrence of spatter, amount of formation of slag, bead shape, slag removal, and mechanical properties of the weld metal in spray arc welding and short arc welding for Ar-CO₂ mixed gas shielded arc welding.

As a result, they discovered that in particular by lowering the total amount of the alkali metal oxides, alkali metal fluorides, and metal oxides causing the amount of formation of slag to increase so as to obtain ultralow slag and by limiting the amount of oxygen of the iron powder to a low amount, a low amount of oxygen of the weld metal and stable low temperature toughness are obtained. Further, they discovered that by limiting the amounts of Na, K, and F, extremely excellent arc conditions of the spray arc welding and short arc welding can both be achieved and the amount of occurrence of spatter can be remarkably reduced.

Furthermore, they discovered that by including at least one of Ni and B, an excellent toughness of the weld metal at a low temperature is also obtained.

Below, the reasons for limitation of the ingredients of the flux cored wire of the present invention are explained.

### (Metal powder in flux: 97 mass% or more)

To increase the property of enabling both high weldability and continuous multipass welding with ultralow slag of a metal-based flux wire, the slag forming agents were kept to a minimum and the metal powder in the flux was made 97 mass% (hereinafter referred to as "%") or more. If the metal powder in the flux is less than 97%, the amount of the slag forming agents relatively increases, the amount of formation of slag increases, long time is taken for removal of slag in multipass welding, and the weld efficiency falls. Further, if the amount of the slag forming agents is large, in particular in short arc welding, the arc becomes unstable and the amount of occurrence of spatter becomes a large quantity. Note that the metal powder in the flux is mainly comprises ferroalloy powder and/or iron powder which may contain C, Si, Mn, and other alloy ingredients such as Ni,B therein.

### (C: 0.03 to 0.12%)

C is added by the C ingredient contained in not only graphite, but also the steel sheath, ferromanganese, ferrosilicon manganese, and iron powder. It is an important ingredient for securing strength and toughness of the weld metal. Further, it has the effects of strengthening the arc concentrating ability and arc strength. In particular, in the metal-based flux cored wire for Ar-CO₂ welding, the amount of C has a large effect on the arc conditions. To obtain a stable arc conditions, it is important that the amount of C be in the prescribed range. If C is less than 0.03%, the strength and toughness of weld metal decrease. Further, the arc concentrating ability and arc strength become weak. At the low welding current side in spray arc welding, many large droplets of spatter are formed and adhere on the base material. On the other hand, if over 0.12%, the weld metal becomes too high in strength and the toughness falls. Further, the arc strength becomes too strong and the amount of occurrence of spatter becomes large quantity.

### (Si: 0.5 to 1.2%)

Si is added by the steel sheath, metal silicon, ferrosilicon, ferrosilicon manganese, etc. It is an important ingredient for securing strength and toughness of the weld metal. Further, it plays a role in raising the viscosity of the molten metal and achieving uniform bead shape. If Si is less than 0.5%, the strength and toughness decrease. Further, viscosity of the molten metal becomes insufficient and the fillet weld bead shape becomes too convex one. On the other hand, if over 1.2%, the weld metal becomes too high in strength and the toughness falls.

### (Mn: 1.5 to 3.5%)

Mn is added by the steel sheath, metal manganese, ferromanganese, ferrosilicon manganese, etc. It is an important ingredient for securing strength and toughness of the weld metal. If Mn is less than 1.5%, the strength and toughness of weld metal decrease. On the other hand, if over 3.5%, the weld metal becomes too high in strength and the toughness falls.

### (S: 0.005 to 0.05%)

S is added by the steel sheath ingredients and iron sulfide etc and is used as a slag aggregation agent and slag removal agent. The metal-based flux cored wire for Ar-CO₂ welding of the present invention is extremely small in amount of formation of slag, so to efficiently remove the slag, it is necessary to make the slag aggregates into a mass and facilitate slag removal. If S is less than 0.005%, the slag is filmy scattered in small amounts slightly on the bead surface and the slag removal becomes difficult. Further, if over 0.05%, hot cracks easily occur in the weld metal.

### (Iron powder with amount of oxygen of iron powder of 0.25% or less: 4.0 to 15.5%)

Iron powder is an essential ingredient for securing the property of ultralow slag formation due to the high welding ability of the metal-based flux cored wire. If the iron powder is less than 4.0%, the high welding ability falls and the characteristics of the metal-based flux cored wire cannot be sufficiently exhibited. On the other hand, if over 15.5%, fluctuation occurs in the flux filling rate in the longitudinal direction of the wire in the drawing process at the stage of wire production, the arc conditions become unstable, and the amount of occurrence of spatter becomes large quantity.

In the metal-based flux cored wire for Ar-CO₂ mixed gas shielded welding of the present invention, to reduce the amount of oxygen of the weld metal and secure low temperature impact toughness, iron powder with a low amount of oxygen is used. If the amount of oxygen of the iron powder is over 0.25%, the amount of oxygen of the weld metal increases and the impact toughness of the weld metal becomes a low value. By using hydrogen-reduced iron powder, atomized iron powder, etc. with an amount of oxygen of the iron powder of 0.25% or less, it is possible to keep the amount of oxygen of the weld metal down to 0.05% or less and obtain low temperature toughness without adding Ti, Al, Mg, Zr, or another deoxidizing agent causing an increase of the amount of formation of slag.

### (Total of one or more of alkali metal oxides, alkali metal fluorides, and metal oxides: 0.35% or less)

If the total of alkali metal oxides formed by potassium titanate, potassium silicate, sodium silicate, etc., alkali metal fluorides formed by sodium fluoride, potassium silicofluoride, cryolite, and lithium fluoride, and metal oxides formed by TiO₂, SiO₂, Al₂O₃, MgO, ZrO₂, etc. is over 0.35%, the amount of formation of slag is increased, the work of slag removal takes long time in multi-pass welding, and the welding efficiency falls. Further, in particular, in short arc welding, the arc becomes unstable and the amount of occurrence of spatter increases. Furthermore, the amount of oxygen of the weld metal is increased, so the toughness falls. Therefore, the total of one or more of alkali metal oxides, alkali metal fluorides, and metal oxides is in amount of 0.35% or less.

### (Total of Na converted value and K converted value of alkali metal oxides and alkali metal fluorides: 0.10% or less)

Alkali metal oxides and alkali metal fluorides also act as arc stabilizers, so may be added in an amount of 0.10% or less by total of Na converted value and K converted value. If the total of the Na converted value and K converted value is over 0.10%, slag with poor removal adheres on the bead surface.

### (F converted value of alkali metal fluorides: 0.10% or less)

Alkali metal fluorides raise the concentrating ability of the arc in spray arc welding and improve the arc conditions. They make occurrence of undercut due to arc instability more difficult. Therefore, it is possible to add 0.10% or less by F converted value of alkali metal fluorides. If the F converted value is over 0.10%, the arc becomes too strong and the amount of occurrence of spatter becomes large quantity.

### (One or more of Ni: 0.3 to 1.5% and B: 0.003 to 0.010%)

Ni and B further improve the toughness of the weld metal at a low temperature. If Ni is less than 0.30% and B is less than 0.003%, no improvement in the toughness of the weld metal can be expected. On the other hand, if Ni is more than 1.5% and B is over 0.010%, hot cracks are liable to occur.

Note that by greatly reducing the TiO₂, SiO₂, Al₂O₃, MgO, ZrO₂, and other metal oxides, the arc condition becomes stable and the amount of occurrence of spatter becomes a small quantity. Further, the amount of oxygen of the weld metal is increased and the low temperature toughness is reduced, so the total of the metal oxides should be kept to 0.15% or less. Furthermore, it is preferable to avoid the addition of Ti, Al, Mg, Zr, and other strong deoxidizing agents to reduce the amount of oxygen of the weld metal, since these form metal oxides which increase the amount of formation of slag.

Further, if the flux filling rate (ratio of mass of flux filled with respect to total mass of wire) is low, the amount of occurrence of spatter increases in short arc welding and spray arc welding and the bead shape becomes too convex with poor affinity with the base material. On the other hand, if high, the arc spreads too much at the high welding current side of spray arc welding, so undercut easily occurs at the base material. Further, the arc strength weakens,
so the depth of penetration becomes small and insufficient melting of the base metal easily occurs in fillet welding. Therefore, the flux filling rate is preferably 8 to 20%.

The shield gas at the time of welding is made an Ar-5 to 25% CO₂ mixed gas to reduce the amount of formation of slag and amount of oxygen of the weld metal.

The metal-based flux cored wire for Ar-CO₂ welding of the present invention is produced by filling flux in a mild steel or alloy steel sheath good in drawability after being filled with flux, then using die drawing or roller drawing to reduce the wire to a predetermined diameter (1.0 to 1.6 mm). The cross-sectional structure of the wire may be the same as that of commercially available flux wires and is not particularly limited.

Below, examples are used to explain the effects of the present invention in further detail.

### Example 1

First, using JIS G3141 SPCC steel strip, the flux cored wires of wire diameters of 1.2 mm and the various ingredients shown in Table 1 were prepared. Note that the flux filling rate was 8.5 to 19%.

Using each of the flux cored wires shown in Table 1, 12 mm thick steel plates (JIS G3106 SM490A) arranged in T-shaped fillet test pieces (lengths 500 mm) were horizontally fillet welded under the welding conditions shown in Table 2. The arc conditions were investigated by spray arc welding (Condition No. 1) and by short arc welding (Condition No. 2). Further, the amount of occurrence of spatter, bead shape, and amount of formation of slag in spray arc welding (Condition No. 1) were investigated. The amount of occurrence of spatter was measured by collecting the total amount of the spatter occurring, converting it to the mass occurring per minute of welding time, and defining 0.5 g/min or less as "good". The amount of formation of slag was converted to the amount formed per meter of bead length. 6 g/m or less was defined as "good".

**Table 1**

| Class | Wire no. | Am't of metal powder in flux (mass%) | Wire ingredients (mass% with respect to total mass of wire) | | | | | | | | |
|---|---|---|---|---|---|---|---|---|---|---|---|
| | | | C | Si | Mn | S | Iron powder | | *1 | *2 | *3 |
| | | | | | | | Am't of oxygen (mass%) | Content | Total of slag forming agents | Total of Na and K converted values | F converted value |
| Inv. ex. | 1 | 98.6 | 0.04 | 0.83 | 2.91 | 0.014 | 0.198 | 10.6 | 0.21 | 0.02 | 0.04 |
| | 2 | 97.1 | 0.08 | 0.61 | 2.78 | 0.025 | 0.203 | 4.5 | 0.26 | 0.05 | - |
| | 3 | 99.1 | 0.05 | 0.85 | 3.19 | 0.019 | 0.113 | 8.9 | 0.14 | 0.06 | 0.02 |
| | 4 | 99.5 | 0.06 | 0.63 | 2.48 | 0.033 | 0.137 | 5.4 | 0.05 | - | - |
| | 5 | 99.2 | 0.03 | 1.06 | 2.15 | 0.009 | 0.243 | 5.4 | 0.08 | - | 0.02 |
| | 6 | 99.1 | 0.11 | 1.14 | 1.81 | 0.039 | 0.245 | 8.9 | 0.12 | 0.03 | 0.02 |
| | 7 | 99.3 | 0.09 | 0.62 | 2.19 | 0.024 | 0.164 | 4.9 | 0.06 | - | - |
| | 8 | 99.3 | 0.05 | 0.92 | 2.29 | 0.041 | 0.139 | 15.2 | 0.13 | 0.03 | 0.02 |
| | 9 | 98.5 | 0.12 | 0.82 | 1.97 | 0.035 | 0.113 | 7.6 | 0.18 | 0.05 | - |
| | 10 | 98.2 | 0.03 | 0.87 | 2.67 | 0.017 | 0.188 | 11.4 | 0.31 | 0.09 | 0.08 |
| Comp. ex. | 11 | 96.0 | 0.06 | 0.89 | 1.83 | 0.019 | 0.213 | 9.2 | 0.56 | 0.08 | 0.07 |
| | 12 | 98.1 | 0.02 | 1.02 | 2.00 | 0.008 | 0.186 | 3.3 | 0.16 | 0.07 | 0.02 |
| | 13 | 99.2 | 0.13 | 0.63 | 2.41 | 0.003 | 0.221 | 13.0 | 0.14 | 0.03 | 0.05 |
| | 14 | 98.0 | 0.04 | 0.45 | 1.94 | 0.022 | 0.181 | 11.5 | 0.31 | 0.08 | 0.15 |
| | 15 | 98.0 | 0.10 | 1.31 | 2.02 | 0.034 | 0.201 | 9.6 | 0.29 | 0.14 | 0.02 |
| | 16 | 98.6 | 0.05 | 0.74 | 1.34 | 0.022 | 0.194 | 16.2 | 0.26 | 0.08 | 0.04 |
| | 17 | 98.5 | 0.08 | 0.98 | 3.68 | 0.054 | 0.143 | 5.1 | 0.17 | - | - |
| | 18 | 98.6 | 0.08 | 0.70 | 1.60 | 0.034 | 0.321 | 7.9 | 0.15 | - | - |
| | 19 | 97.8 | 0.05 | 0.68 | 1.87 | 0.024 | 0.157 | 13.8 | 0.40 | 0.09 | 0.06 |

| | | | | | | | | | | | |
|---|---|---|---|---|---|---|---|---|---|---|---|
| *1: Slag forming agents are one or more of alkali metal oxides, alkali metal fluorides, and metal oxides (potassium titanate, potassium silicate, sodium silicate, potassium silicofluoride, cryolite, sodium fluoride, lithium fluoride, TiO₂, SiO₂, Al₂O₃, MgO, ZrO₂, etc.) *2: Total of Na converted value and K converted value of alkali metal oxides and alkali metal fluorides. *3: F converted value of alkali metal fluorides. | | | | | | | | | | | |

Balance of Fe of steel sheath and Fe ingredient from the flux(ferroalloy) etc. and unavoidable impurities.

**Table 2**

| Condition no. | Welding current | Arc voltage | Welding speed | Shield gas flow rate |
|---|---|---|---|---|
| 1 | 270A | 29V | 30 cm/min | 80%Ar-20%CO₂ 25 liters/min |
| 2 | 120A | 15V | 60 cm/min | |

| | | | | |
|---|---|---|---|---|
| Condition No. 1 is spray arc welding Condition No. 2 is short arc welding | | | | |

Next, in accordance with JIS Z3313, a 20 mm thick steel plate (JIS G3126 SLA235A) was used for a welded metal test under the welding condition No. 1 shown in Table 2 to obtain tensile test pieces and impact toughness test pieces for testing. Note that tensile strengths of 520 to 640 N/mm² and absorption energies at the test temperature of -40°C of an average for three pieces of 60J or more were defined as "good". These results are shown together in Table 3.

**Table 3**

| Class | Wire no. | Spray arc welding | | | | | | Short arc welding | | Mechanical properties | | Overall evaluation |
|---|---|---|---|---|---|---|---|---|---|---|---|---|
| | | Arc conditions | Bead shape/ appearance | Am't of formation of slag (g/m) | Slag removal | Am't of occurrence of spatter (g/min) | Hot cracks | Arc conditions | Remarks | Tensile strength (N/mm²) | Absorption energy -40°C (J) | |
| Inv. ex. | 1 | Good | Good | 4.2 | Good | 0.24 | None | Good | - | 552 | 74 | Good |
| | 2 | Good | Good | 3.9 | Good | 0.28 | None | Good | - | 615 | 73 | Good |
| | 3 | Good | Good | 3.1 | Good | 0.21 | None | Good | - | 604 | 97 | Good |
| | 4 | Good | Good | 2.8 | Good | 0.22 | None | Good | - | 597 | 88 | Good |
| | 5 | Good | Good | 2.9 | Good | 0.24 | None | Good | - | 536 | 75 | Good |
| | 6 | Good | Good | 3.2 | Good | 0.31 | None | Good | - | 601 | 71 | Good |
| | 7 | Good | Good | 2.4 | Good | 0.19 | None | Good | - | 584 | 79 | Good |
| | 8 | Good | Good | 4.2 | Good | 0.27 | None | Good | - | 576 | 82 | Good |
| | 9 | Good | Good | 3.7 | Good | 0.25 | None | Good | - | 599 | 97 | Good |
| | 10 | Good | Good | 4.9 | Good | 0.27 | None | Good | - | 528 | 76 | Good |
| Comp. ex. | 11 | Good | Welded am't small | 7.4 | Poor | 0.48 | None | Unstable | Spatter large | 526 | 32 | Poor |
| | 12 | Arc weak | Welded am't small . | 5.4 | Good | 0.65 | None | Arc weak | - | 512 | 31 | Poor |
| | 13 | Arc too strong | Good | 5.1 | Poor | 0.68 | None | Arc too strong | Spatter somewhat large | 658 | 47 | Poor |
| | 14 | Arc too strong | Protruding bead | 4.9 | Good | 0.67 | None | Arc too strong | Spatter somewhat large | 511 | 24 | Poor |
| | 15 | Good | Good | 4.2 | Poor | 0.31 | None | Good | - | 655 | 41 | Poor |
| | 16 | Unstable | Good | 3.9 | Good | 0.64 | None | Unstable | Spatter large | 516 | 27 | Poor |
| | 17 | Good | Good | 3.4 | Good | 0.29 | Yes (crater crack) | Good | - | 648 | 45 | Poor |
| | 18 | Good | Good | 2.7 | Good | 0.25 | None | Good | - | 581 | 27 | Poor |
| | 19 | Good | Good | 7.8 | Poor | 0.53 | None | Unstable | Spatter large | 564 | 27 | Poor |

Wire Nos. 1 to 10 in Table 1 and Table 2 are invention examples, while Wire Nos. 11 to 19 are comparative examples. The invention examples of Wire Nos. 1 to 10 were suitable in the amount of metal powder in the flux, the C, Si, Mn, S, iron powder and amount of oxygen of the iron powder, and total of the alkali metal oxides, alkali metal fluorides, and metal oxides of the fluxes, so were excellent in all of the arc conditions, amount of occurrence of spatter, bead shape, amount of formation of slag, and slag removal in both spray arc welding and short arc welding and further were excellent in the mechanical properties in the welded metal test, the hot cracks do not occur in the weld metal, that is, were extremely satisfactory in results.

Wire No. 11 among the comparative examples was low in metal powder in the flux, so was relatively increased in the total of the alkali metal oxides, alkali metal fluorides, and metal oxides (slag forming agents), so a large amount of slag was formed, that its slag removal takes long time, and the welded amount was also small. Further, in short arc welding, the arc was unstable and the amount of occurrence of spatter was large. Further, the amount of oxygen of the weld metal was high and the absorption energy was low in value.

Wire No. 12 had a low C, so was weak in arc strength, therefore the arc was unstable in spray arc welding and many large droplets of spatter occurred. Further, the iron powder was low, so the welded amount was small.

Wire No. 13 had a high C, so was high in tensile strength of the weld metal and low in value of the absorption energy. Further, the arc was too strong and much spatter occurred. Furthermore, the S was low, so slag was scattered in small amounts on the bead and slag removal was poor.

Wire No. 14 had a low Si, so had a too convex bead. Further, the tensile strength was low and the absorption energy was also low in value. Furthermore, the F converted value of the alkali metal fluorides was high, so the arc became too strong and the amount of occurrence of spatter was large quantity.

Wire No. 15 had a high Si, so the tensile strength of the weld metal was high and the absorption energy was low in value. Further, the total of the Na converted value and K converted value of the alkali metal oxides and alkali metal fluorides were also high, so the slag removal was poor.

Wire No. 16 had a low Mn, so the tensile strength was low and the absorption energy was also low in value. Further, it had a high iron powder, so the arc was unstable and the amount of occurrence of spatter was large quantity.

Wire No. 17 had a high Mn, so the tensile strength of the weld metal was high and the absorption energy was low in value. Further, it had a high S, so crater cracks occurred.

Wire No. 18 had a high amount of oxygen of the iron powder, so the absorption energy of the weld metal was low in value.

Wire No. 19 had a high total amount of alkali metal oxides, alkali metal fluorides, and metal oxides, so the amount of slag was large quantity and long time was required for slag removal. Further, in short arc welding, the arc was unstable and the amount of occurrence of spatter was large quantity. Furthermore, the amount of oxygen of the weld metal was high and the absorption energy was also low in value.

### Example 2

Using JIS G3141 SPCC steel strip for the steel sheath, flux cord wires of wire diameters of 1.2 mm and the various ingredients shown in Table 4 were prepared. Using the flux cored wires shown in Table 4, in accordance with JIS Z3313, a 20 mm thick steel plate (JIS G3126 SLA235A) was used for a welded metal test under the welding condition No. 1 shown in Table 2 to obtain tensile test pieces and impact test pieces for testing. Note that tensile strengths of 520 to 640 N/mm² and absorption energies at a test temperature of -60°C of an average for three pieces of 60J or more were defined as "good". These results are also shown together in Table 4.

**Table 4**

| Class | Wire no. | Am't of metal powder in flux (mass %) | Wire ingredients (mass% with respect to total mass of wire) | | | | | | | | | | | Mechanical properties | | | Overall evaluation |
|---|---|---|---|---|---|---|---|---|---|---|---|---|---|---|---|---|---|
| | | | C | Si | Mn | S | Iron powder | | *1 | *2 | *3 | Ni | B | Ten- sile strength (N/mm²) | Absorp- tion energy -60°C (J) | Others | |
| | | | | | | | An't of oxygen (mass%) | Content | Total of slag forming agents | Total of Na and K converted values | F converted value | | | | | | |
| Inv. ex. | 20 | 99.1 | 0.04 | 0.86 | 2.31 | 0.018 | 0.194 | 9.8 | 0.13 | 0.06 | 0.01 | 0.32 | - | 609 | 97 | - | Good |
| | 21 | 98.4 | 0.08 | 0.79 | 2.49 | 0.021 | 0.172 | 9.2 | 0.22 | 0.06 | 0.03 | - | 0.0042 | 587 | 85 | - | Good |
| | 22 | 99.4 | 0.06 | 0.84 | 2.17 | 0.028 | 0.204 | 5.5 | 0.07 | - | - | 0.68 | 0.0044 | 605 | 108 | - | Good |
| | 23 | 98.7 | 0.04 | 0.70 | 1.94 | 0.031 | 0.142 | 9.9 | 0.20 | 0.06 | 0.03 | 0.86 | 0.0060 | 576 | 117 | - | Good |
| | 24 | 98.9 | 0.04 | 0.83 | 2.21 | 0.027 | 0.201 | 7.1 | 0.14 | - | 0.03 | 1.43 | - | 615 | 122 | - | Good |
| | 25 | 99.0 | 0.07 | 0.66 | 1.82 | 0.037 | 0.175 | 8.9 | 0.13 | 0.04 | 0.01 | - | 0.0091 | 608 | 109 | - | Good |
| Comp. ex. | 26 | 98.4 | 0.07 | 0.88 | 2.21 | 0.036 | 0.164 | 8.1 | 0.21 | 0.06 | 0.03 | 0.13 | 0.0013 | 593 | 54 | - | Poor |
| | 27 | 98.7 | 0.05 | 1.10 | 2.21 | 0.024 | 0.173 | 6.1 | 0.17 | 0.04 | 0.03 | 1.69 | - | 618 | 97 | Crater crack | Poor |
| | 28 | 98.6 | 0.05 | 0.77 | 2.21 | 0.026 | 0.205 | 8.5 | 0.18 | - | 0.02 | - | 0.0016 | 592 | 36 | - | Poor |
| | 29 | 98.5 | 0.05 | 0.83 | 1.92 | 0.031 | 0.198 | 8.1 | 0.20 | 004 | 0.04 | - | 0.0117 | 601 | 75 | Crater crack | Poor |

| | | | | | | | | | | | | | | | | | |
|---|---|---|---|---|---|---|---|---|---|---|---|---|---|---|---|---|---|
| *1: Slag forming agents are one or more of alkali metal oxides, alkali metal fluorides, and metal oxides (potassium titanate, potassium silicate, sodium silicate, potassium silicofluoride, cryolite, sodium fluoride, lithium fluoride, TiO₂, SiO₂, Al₂O₃, MgO, ZrO₂, etc.) *2: Total of Na converted value and K converted value of alkali metal oxides and alkali metal fluorides. *3: F converted value of alkali metal fluorides. Balance of Fe of steel sheath and Fe ingredients from the flux(ferroalloy) etc., and unavoidable impurities. | | | | | | | | | | | | | | | | | |

Wire Nos. 20 to 25 in Table 4 are invention examples, while Wire Nos. 26 to 29 are comparative examples. The invention examples of Wire Nos. 20 to 25 contained suitable amounts of at least one of Ni or B of the wires, so were much superior in mechanical properties in the weld metal tests. Further, they were suitable in the amount of metal powder in the flux, C, Si, Mn, S, iron powder and amount of oxygen of the iron powder, and total of alkali metal oxides, alkali metal fluorides, and metal oxides of the fluxes, so were excellent in all of the arc conditions in spray arc welding and short arc welding in the separate fillet weld tests, amount of occurrence of spatter, bead shape, amount of formation of slag, and slag removal.

The comparative example Wire No. 26 had low Ni and B, while the Wire No. 28 had low B, so both were low in the value of the absorption energy of the weld metal.

Wire No. 27 had high Ni, while Wire No. 29 had high B, so both suffered from crater cracks.

While the invention has been described with reference to specific embodiments chosen for purpose of illustration, it should be apparent that numerous modifications could be made thereto by those skilled in the art without departing from the basic concept and scope of the invention.

## Claims

1. A metal-based flux cored wire for Ar-CO₂ mixed gas shielded arc welding comprising a steel sheath filled with a flux, **characterized in that**
the flux contains metal powder in 97 mass% or more, and the metal-based flux cored wire comprises, by mass% with respect to the total weight of the wire,
C: 0.03 to 0.12%,
Si: 0.5 to 1.2%,
Mn: 1.5 to 3.5%,
S: 0.005 to 0.05%, optionally one or both of Ni: 0.3 to 1.5% and B: 0.003 to 0.010% and
iron powder with amount of oxygen of 0.25% or less : 4.0 to 15.5%,
total of one or more of alkali metal oxides, alkali metal fluorides, and metal oxides:0.35% or less,
and the balance of mainly Fe ingredient of the steel sheath, Fe ingredients from the flux etc. and unavoidable impurities.

2. The metal-based flux cored wire for Ar-CO₂ mixed gas shielded arc welding as set forth in claim 1, wherein a total of Na converted value and K converted value of the alkali metal oxides and alkali metal fluorides is 0.10% or less and F converted value of the alkali metal fluoride is 0.10% or less.

## Patentansprüche

1. Draht mit Flußmittelkern auf Metallbasis zum Ar/CO₂-Mischschutzgas-Lichtbogenschweißen mit einem Stahlmantel, der mit einem Flußmittel gefüllt ist, **dadurch gekennzeichnet, daß**
das Flußmittel mindestens 97 Masse-% Metallpulver enthält und
der Draht mit Flußmittelkern auf Metallbasis bezogen auf das Gesamtgewicht des Drahts in Masse-% enthält: 0,03 bis 0,12 % C,
0,5 bis 1,2 % Si,
1,5 bis 3,5 % Mn,
0,005 bis 0,05 % S,
optional 0,3 bis 1,5 % Ni und/oder 0,003 bis 0,010 % B und
4,0 bis 15,5 % Eisenpulver mit einer Sauerstoffmenge von höchstens 0,25 %,
höchstens 0,35 % der Summe von Alkalimetalloxiden, Alkalimetallfluoriden und/oder Metalloxiden
sowie als Rest hauptsächlich einen Fe-Bestandteil des Stahlmantels, Fe-Bestandteile aus dem Flußmittel usw. und unvermeidliche Verunreinigungen.

2. Draht mit Flußmittelkern auf Metallbasis zum Ar/CO₂-Mischschutzgas-Lichtbogenschweißen nach Anspruch 1, wobei eine Summe des Na-konvertierten Werts und K-konvertierten Werts der Alkalimetalloxide und Alkalimetallfluoride höchstens 0,10 % beträgt und der F-konvertierte Wert des Alkalimetallfluorids höchstens 0,10 % beträgt.

## Revendications

1. Fil à âme de fondant à base métallique pour soudage à l'arc sous protection par mélange gazeux Ar-CO₂ comprenant une gaine d'acier remplie d'un fondant, **caractérisé en ce que**
le fondant contient une poudre métallique à raison de 97 % en masse ou plus, et
le fil à âme de fondant à base métallique comprend, en % en masse par rapport au poids total du fil,
C : 0,03 à 0,12 %,
Si : 0,5 à 1,2 %,
Mn : 1,5 à 3,5 %,
S : 0,005 à 0,05 %, éventuellement l'un ou les deux de Ni : 0,3 à 1,5 % et B : 0,003 à 0,010 % et
une poudre de fer avec une quantité d'oxygène de 0,25 % ou moins : 4,0 à 15,5 %,
le total d'un ou plusieurs d'oxydes de métaux alcalins, de fluorures de métaux alcalins, et d'oxydes métalliques : 0,35 % ou moins,
et le complément principalement d'ingrédient Fe de la gaine d'acier, d'ingrédients Fe provenant du fondant, etc. et d'impuretés inévitables.

2. Fil à âme de fondant à base métallique pour soudage à l'arc sous protection par mélange gazeux Ar-CO₂ selon la revendication 1 où un total de la valeur convertie en Na et de la valeur convertie en K des oxydes de métaux alcalins et des fluorures de métaux alcalins est 0,10 % ou moins et la valeur convertie en F du fluorure de métal alcalin est 0,10 % ou moins.
